# EUROPÄISCHE PATENTSCHRIFT

(11) **EP 3 317 735 B1**
(45) Veröffentlichungstag und Bekanntmachung des Hinweises auf die Patenterteilung: **17.02.2021**
(21) Anmeldenummer: 16721831.2
(22) Anmeldetag: 12.05.2016
(51) Int. Cl.: B62D 15/02, E04H 6/18, E04H 6/42, G05D 1/02, G08G 1/14

(54) **KONZEPT ZUM ÜBERFÜHREN EINES FAHRZEUGS VON EINER STARTPOSITION ZU EINER ZIELPOSITION**
SCHEME FOR TRANSFERRING A VEHICLE FROM A STARTING POSITION TO A TARGET POSITION
CONCEPT POUR FAIRE PASSER UN VÉHICULE D'UN EMPLACEMENT DE DÉPART À UN EMPLACEMENT CIBLE

(30) Priorität: 01.07.2015 DE 102015212313
(43) Veröffentlichungstag der Anmeldung: 09.05.2018
(73) Patentinhaber: Robert Bosch GmbH, 70442 Stuttgart (DE)
(72) Erfinder: NORDBRUCH, Stefan, 70806 Kornwestheim (DE); NICODEMUS, Rolf, 74321 Bietigheim-Bissingen (DE); SCHERER, Willi, 72768 Reutlingen (DE)
(86) Internationale Anmeldenummer: PCT/EP2016/060684
(87) Internationale Veröffentlichungsnummer: WO 2017/001101

(56) Entgegenhaltungen:
- DE-A1-102009 029 720
- DE-A1-102009 046 912
- DE-A1-102012 222 562
- DE-A1-102013 222 071
- DE-U1-202009 000 259
- US-A1- 2005 207 876
- US-A1- 2010 156 672
- US-A1- 2012 188 100
- US-A1- 2015 139 762

## Beschreibung

Die Erfindung betrifft ein Verfahren zum Überführen eines Fahrzeugs von einer Startposition zu einer Zielposition. Die Erfindung betrifft ferner ein Fahrzeug, ein Parksystem sowie ein Computerprogramm.

### Stand der Technik

Die Offenlegungsschrift DE 10 2012 222 562 A1 zeigt ein System für bewirtschaftete Parkflächen zur Überführung eines Fahrzeugs von einer Startposition in eine Zielposition.

Die Offenlegungsschrift DE 10 2009 029 720 A1 zeigt eine Parkanlage umfassend mindestens eine Parkfläche, auf welcher Fahrzeuge abstellbar sind.

Die Offenlegungsschrift US 2010/156672 A1 zeigt ein System und ein Verfahren für ein automatisches Parken von Fahrzeugen.

Die Offenlegungsschrift US 2012/188100 A1 zeigt ein Terminal, eine Vorrichtung und ein Verfahren zum Bereitstellen von angepassten Auto-Valet-Parkservices.

Die Offenlegungsschrift DE 10 2009 046 912 A1 zeigt ein Verfahren für die Führung eines Fahrzeugs von einer Start- zu einer Zielposition.

Die Offenlegungsschrift DE 10 2013 222 071 A1 zeigt ein Parkraumverwaltungssystem.

Die Offenlegungsschrift US 2015/139762 A1 offenbart einen mehrgeschossigen Parkplatz mit einem automatischem Parksystem.

Die Offenlegungsschrift US 2005/207876 beschreibt ein automatisches Parksystem.

Bei einem vollautomatisierten (autonomen) sogenannten Valet Parking (AVP) wird ein Fahrzeug von seinem Fahrer auf einer Abgabestelle, zum Beispiel vor einem Parkhaus geparkt und von da fährt das Fahrzeug selber in eine Parkposition/Parkbucht und wieder zurück zur Abgabestelle.

Eine große Herausforderung beim AVP ist ein Mixbetrieb von AVP-Fahrzeugen mit manuell geführten Fahrzeugen und Fußgängern. Die Fahr- und Ein-/Ausparkvorgänge können dadurch sehr viel komplexer werden. Dies insbesondere dann, wenn sehr weite Fahrwege zurückzulegen sind, weil die AVP-Parkpositionen an einer bezogen auf eine Einfahrt des Parkhauses weit entfernten Stelle liegen, zum Beispiel in einer obersten Etage eines Parkhauses.

### Offenbarung der Erfindung

Die der Erfindung zugrunde liegende Aufgabe kann darin gesehen werden, ein effizientes Konzept zum Überführen eines Fahrzeugs von einer Startposition in eine Zielposition bereitzustellen, wobei die beiden Positionen von einem mehrgeschossigen Parkplatz umfasst sind und wobei die beiden Positionen in verschiedenen Geschossen des Parkplatzes lokalisiert sind.

Diese Aufgabe wird mittels des jeweiligen Gegenstands der unabhängigen Ansprüche gelöst. Vorteilhafte Ausgestaltungen der Erfindung sind Gegenstand von jeweils abhängigen Unteransprüchen.

Nach einem Aspekt wird ein Verfahren zum Überführen eines Fahrzeugs von einer Startposition zu einer Zielposition bereitgestellt, wobei die beiden Positionen von einem mehrgeschossigen Parkplatz umfasst sind und wobei die beiden Positionen in verschiedenen Geschossen des Parkplatzes lokalisiert sind, wobei das Fahrzeug während der Überführung eine Aufzugsanlage des Parkplatzes verwendet, um vom Geschoss der Startposition zum Geschoss der Zielposition zu gelangen, wobei das Überführen ein Fernsteuern des Fahrzeugs und/oder ein zumindest teilautonomes Fahren des Fahrzeugs umfasst.

Gemäß einem weiteren Aspekt wird ein Fahrzeug bereitgestellt, umfassend eine Steuerungseinrichtung, die ausgebildet ist, das Fahrzeug zumindest teilautonom von einer Startposition zu einer Zielposition zu überführen, wobei die beiden Positionen von einem mehrgeschossigen Parkplatz umfasst sind und wobei die beiden Positionen in verschiedenen Geschossen des Parkplatzes lokalisiert sind, wobei die Steuerungseinrichtung ausgebildet ist, das Fahrzeug während der Überführung in eine Aufzugsanlage des Parkplatzes zu führen und/oder aus der Aufzugsanlage des Parkplatzes zu führen, so dass das Fahrzeug vom Geschoss der Startposition zum Geschoss der Zielposition gelangen kann.

Nach noch einem Aspekt wird ein Parksystem für Fahrzeuge bereitgestellt, umfassend einen mehrgeschossigen Parkplatz mit einer Aufzugsanlage und eine Steuerungseinrichtung, die ausgebildet ist, ein Fahrzeug ferngesteuert von einer Startposition zu einer Zielposition zu überführen und/oder ein zumindest teilweise autonom fahrendes Fahrzeug bei seiner zumindest teilweisen autonomen Fahrt von der Startposition zu der Zielposition zu assistieren, wobei die beiden

Positionen von dem Parkplatz umfasst sind und wobei die beiden Positionen in verschiedenen Geschossen des Parkplatzes lokalisiert sind, wobei die Steuerungseinrichtung ausgebildet ist, das Fahrzeug während der Überführung in eine Aufzugsanlage des Parkplatzes ferngesteuert und/oder assistierend zu führen und/oder aus der Aufzugsanlage des Parkplatzes ferngesteuert und/oder assistierend zu führen, so dass das Fahrzeug vom Geschoss der Startposition zum Geschoss der Zielposition gelangen kann.

Gemäß einem weiteren Aspekt wird ein Computerprogramm bereitgestellt, welches Programmcode zur Durchführung des erfindungsgemäßen Verfahrens umfasst, wenn das Computerprogramm auf einem Computer ausgeführt wird.

Die Erfindung umfasst also insbesondere und unter anderem den Gedanken, im Rahmen eines AVP-Vorgangs (AVP: Automated Valet Parking, automatischer oder vollautomatisierter Parkvorgang) eine Aufzugsanlage des Parkplatzes zu benutzen, damit das Fahrzeug von der Startposition zur Zielposition gelangen kann. Dadurch wird insbesondere der technische Vorteil bewirkt, dass das Fahrzeug effizient von der Startposition zur Zielposition überführt werden kann, wenn die beiden Positionen in verschiedenen Geschossen des Parkplatzes lokalisiert sind.

Geschosse eines Parkplatzes umfassen insbesondere ein Erdgeschoss, ein Kellergeschoss, Untergeschosse und/oder Obergeschosse, insbesondere ein unterstes Geschoss, insbesondere ein oberes Geschoss.

Eine Startposition ist zum Beispiel eine Abgabeposition und eine Zielposition ist zum Beispiel eine Parkposition.

Eine Abgabeposition im Sinne der vorliegenden Erfindung, ist eine Position, an welcher ein Fahrer des Fahrzeugs sein Fahrzeug für einen ferngesteuerten und/oder zumindest teilautonomen Parkvorgang abstellen kann.

Eine Parkposition im Sinne der vorliegenden Erfindung ist eine Position, an welcher das Fahrzeug parken soll.

Das Fahrzeug wird also zum Beispiel von der Abgabeposition zur Parkposition überführt.

Eine Startposition ist zum Beispiel eine Parkposition und eine Zielposition ist zum Beispiel eine Abholposition. Das Fahrzeug wird also zum Beispiel von der Parkposition zur Abholposition überführt.

Eine Abholposition im Sinne der vorliegenden Erfindung, ist eine Position, an welcher ein Fahrzeug nach einem Ende eines Parkvorgangs abgeholt werden soll.

Nach einer Ausführungsform ist die Abgabeposition gleich der Abholposition oder verschieden von der Abholposition.

In einer Ausführungsform wird das Fahrzeug von der Abgabeposition zur Parkposition überführt und nach Ende eines Parkvorgangs zur Abholposition, insbesondere zurück zur Abgabeposition, überführt.

Ein Parkplatz im Sinne der vorliegenden Erfindung kann auch als eine Parkfläche bezeichnet werden und dient als Abstellfläche für Fahrzeuge. Der Parkplatz bildet somit insbesondere eine zusammenhängende Fläche, die mehrere Stellplätze (bei einem Parkplatz auf privatem Grund) oder Parkstände (bei einem Parkplatz auf öffentlichem Grund) aufweist. Der Parkplatz kann nach einer Ausführungsform als ein Parkhaus ausgebildet sein. Insbesondere ist der Parkplatz als eine Parkgarage ausgebildet.

Autonom im Sinne der vorliegenden Erfindung bedeutet insbesondere, dass das Fahrzeug selbstständig, also ohne einen Eingriff eines Fahrers, navigiert. Das Fahrzeug fährt also selbstständig auf dem Parkplatz, ohne dass ein Fahrer hierfür das Fahrzeug steuern müsste. Das heißt also insbesondere, dass die Steuerungseinrichtung das Fahrzeug autonom führt. Ein Führen umfasst insbesondere eine Quer- und/oder eine Längsführung des Fahrzeugs. Beim autonomen Fahren muss der Fahrer also selbst nicht im Fahrzeug sein. Die Steuerungseinrichtung ist also insbesondere ausgebildet, eine Quer- und/oder eine Längsführung des Fahrzeugs zu steuern.

Teilautonom im Sinne der vorliegenden Erfindung bedeutet insbesondere, dass das Fahrzeug bei seiner autonomen Fahrt unterstützt oder assistiert wird. Dies insbesondere mittels der Steuerungseinrichtung des Parksystems. Zum Beispiel bedeutet ein Assistieren, dass die Steuerungseinrichtung des Parksystems an das Fahrzeug eine digitale Karte des Parkplatzes über ein Kommunikationsnetzwerk sendet. Dadurch kann dann das Fahrzeug basierend auf der digitalen Karte auf dem Parkplatz autonom fahren.

Zum Beispiel bedeutet ein Assistieren, dass die Steuerungseinrichtung des Parksystems die Start- und/oder die Zielposition an das Fahrzeug über ein Kommunikationsnetzwerk sendet.

Zum Beispiel bedeutet ein Assistieren, dass die Steuerungseinrichtung des Parksystems Positionsdaten und/oder Geschwindigkeitsdaten von weiteren Fahrzeugen, die sich auf dem Parkplatz befinden, über ein Kommunikationsnetzwerk an das Fahrzeug sendet. Dadurch kann die Steuerungseinrichtung des Fahrzeugs diese weiteren Fahrzeuge bei seiner autonomen Fahrt auf dem Parkplatz berücksichtigen.

Zum Beispiel bedeutet ein Assistieren, dass die Steuerungseinrichtung des Parksystems eine Solltrajektorie von zumindest einem Teil einer abzufahrenden Strecke von der Startposition zur Zielposition, insbesondere die komplett abzufahrende Strecke von der Startposition zur Zielposition, an das Fahrzeug über ein Kommunikationsnetzwerk sendet. Dadurch kann die Steuerungseinrichtung des Fahrzeugs zum Beispiel eine Isttrajektorie des Fahrzeugs auf die Solltrajektorie regeln.

Ein Assistieren bedeutet insbesondere ein externes Unterstützen des Fahrzeugs bei seiner Fahrt auf dem Parkplatz. Eine solch assistierte Fahrt wird daher als eine teilautonome Fahrt bezeichnet.

Die Formulierung "teilweise autonom" oder "teilautonom" umfasst somit den Fall "autonom", also ohne externe Unterstützung.

Nach einer Ausführungsform ist die Parkposition im obersten Geschoss des Parkplatzes lokalisiert.

In einer anderen Ausführungsform ist die Parkposition im untersten Geschoss des Parkplatzes lokalisiert.

Nach einer Ausführungsform ist die Abgabeposition im Erdgeschoss des Parkplatzes lokalisiert.

In einer anderen Ausführungsform ist die Abholposition im Erdgeschoss des Parkplatzes lokalisiert.

Nach einer anderen Ausführungsform ist vorgesehen, dass ein Betrieb der Aufzugsanlage in Abhängigkeit von einer Bewegung des Fahrzeugs während der Überführung gesteuert wird, um eine Wartezeit des Fahrzeugs an der Aufzugsanlage zu reduzieren.

Dadurch wird insbesondere der technische Vorteil bewirkt, dass eine Wartezeit des Fahrzeugs an der Aufzugsanlage reduziert werden kann. Insbesondere umfasst ein Reduzieren ein Minimieren.

Gemäß einer weiteren Ausführungsform ist vorgesehen, dass das Fahrzeug während der Überführung autonom eine Beförderung mittels der Aufzugsanlage anfordert. Anfordern bedeutet hier insbesondere, dass eine Kabine oder Transportplattform der Aufzugsanlage zum Geschoss der Startposition fahren soll, damit das Fahrzeug bei seiner Ankunft an der Aufzugsanlage direkt in die Kabine oder auf die Transportplattform fahren kann. Zum Beispiel ist die Steuerungseinrichtung des Fahrzeugs ausgebildet ist, die Beförderung der Aufzugsanlage während der Überführung anzufordern.

Dadurch würde insbesondere der technische Vorteil bewirkt, dass eine Wartezeit des Fahrzeugs an der Aufzugsanlage reduziert, insbesondere minimiert, werden kann.

In einer Ausführungsform ist vorgesehen, dass das Fahrzeug selbst die Aufzugsanlage steuert (zum Beispiel mittels seiner Steuerungseinrichtung), um mittels der Aufzugsanlage vom Geschoss der Startposition zum Geschoss der Zielposition befördert zu werden. Das heißt, dass die Steuerungseinrichtung des Fahrzeugs zum Beispiel ausgebildet ist, die Aufzugsanlage derart zu steuern, dass das Fahrzeug von Geschoss der Startposition zum Geschoss der Zielposition befördert wird.

In einer Ausführungsform ist vorgesehen, dass die Aufzugsanlage mittels einer fahrzeugexternen Steuerungseinrichtung, zum Beispiel mittels der Steuerungseinrichtung des Parksystems, gesteuert wird, um das Fahrzeug mittels der Aufzugsanlage vom Geschoss der Startposition zum Geschoss der Zielposition zu befördern. Die fahrzeugexterne Steuerungseinrichtung ist also vorzugsweise ausgebildet, die Aufzugsanlage zu steuern, um das Fahrzeug mittels der Aufzugsanlage vom Geschoss der Startposition zum Geschoss der Zielposition zu befördern.

In einer Ausführungsform ist vorgesehen, dass das Fahrzeug während der Überführung autonom eine Beförderung mittels der Aufzugsanlage anfordert, wobei die Aufzugsanlage mittels einer fahrzeugexternen Steuerungseinrichtung, zum Beispiel mittels der Steuerungseinrichtung des Parksystems, gesteuert wird, um das Fahrzeug mittels der Aufzugsanlage vom Geschoss der Startposition zum Geschoss der Zielposition zu befördern.

Nach einer anderen Ausführungsform ist vorgesehen, dass zumindest eine der beiden Positionen (vorzugsweise beide Positionen) innerhalb eines für manuell geführte Fahrzeuge und/oder für Personen gesperrten Bereichs lokalisiert ist.

Dadurch wird insbesondere der technische Vorteil bewirkt, dass ein Mixbetrieb oder ein Mischbetrieb aus manuell geführten Fahrzeugen und/oder Personen und einem AVP-Fahrzeug (also dem ferngesteuerten und/oder zumindest teilautonom fahrenden Fahrzeug) in dem Bereich vermieden werden kann. Dadurch kann insbesondere für Personen eine Sicherheit erhöht werden. Insbesondere kann ein Kollisionsrisiko zwischen einem AVP-Fahrzeug und einem manuell geführten Fahrzeug minimiert werden.

In einer Ausführungsform ist vorgesehen, dass zumindest eine der beiden Positionen (vorzugsweise beide Positionen) innerhalb eines für manuell geführte Fahrzeuge und/oder für Personen zugelassenen Bereichs lokalisiert ist. Dadurch wird in vorteilhafter Weise ein Mischbetrieb zugelassen, was eine größere Akzeptanz des erfindungsgemäßen Konzepts bewirken kann. Ferner kann der Parkplatz dann sowohl von manuell geführten Fahrzeugen als auch von AVP-Fahrzeugen genutzt werden, was eine effiziente Nutzung des Parkplatzes bewirken kann. Ein zugelassener Bereich ist also insbesondere ein Bereich, der offen oder frei für Personen und/oder manuell geführte Fahrzeuge ist.

Nach einer Ausführungsform ist vorgesehen, dass das Fahrzeug ausgebildet oder eingerichtet ist, das erfindungsgemäße Verfahren aus- oder durchzuführen.

In einer anderen Ausführungsform ist vorgesehen, dass das Parksystem ausgebildet oder eingerichtet ist, das erfindungsgemäße Verfahren aus- oder durchzuführen.

Nach einer Ausführungsform umfasst das Parksystem eine Kommunikationsschnittstelle, die ausgebildet ist, mit dem Fahrzeug, insbesondere mit der Steuerungseinrichtung, zu kommunizieren. Dies insbesondere über ein Kommunikationsnetzwerk.

In einer anderen Ausführungsform umfasst das Fahrzeug eine Kommunikationsschnittstelle. Die Kommunikationsschnittstelle ist insbesondere ausgebildet, mit dem Parksystem, insbesondere mit der Steuerungseinrichtung des Parksystems, zu kommunizieren. Dies insbesondere über ein Kommunikationsnetzwerk.

Das Kommunikationsnetzwerk umfasst insbesondere ein WLAN-Netzwerk und/oder ein Mobilfunknetzwerk.

Nach einer Ausführungsform ist respektive wird eine Kommunikation über das Kommunikationsnetzwerk verschlüsselt.

Das Parksystem ist nach einer Ausführungsform von einem Parkplatzverwaltungssystem umfasst. Das Parkplatzverwaltungssystem kann insbesondere als ein Parkplatzmanagementsystem bezeichnet werden.

Wenn der Parkplatz von einem Parkhaus umfasst ist, kann das Parkplatzverwaltungssystem als ein Parkhausverwaltungssystem, insbesondere als ein Parkhausmanagementsystem, bezeichnet werden.

Ausführungsformen des Fahrzeugs und des Parksystems ergeben sich analog aus entsprechenden Ausführungsformen des Verfahrens und umgekehrt. Technische Funktionalitäten des Fahrzeugs und des Parksystems ergeben sich also analog aus entsprechenden technischen Funktionalitäten des Verfahrens und umgekehrt.

Die Erfindung wird im Folgenden anhand von bevorzugten Ausführungsbeispielen näher erläutert. Hierbei zeigen
- Fig. 1: eine schräge Draufsicht auf ein Parksystem,
- Fig. 2: eine vereinfachte seitliche Schnittansicht des Parksystems der Fig. 1,
- Fig. 3: ein Fahrzeug und
- Fig. 4: ein Ablaufdiagramm eines Verfahrens zum Überführen eines Fahrzeugs von einer Startposition zu einer Zielposition.

Im Folgenden können für gleiche Merkmale gleiche Bezugszeichen verwendet werden.

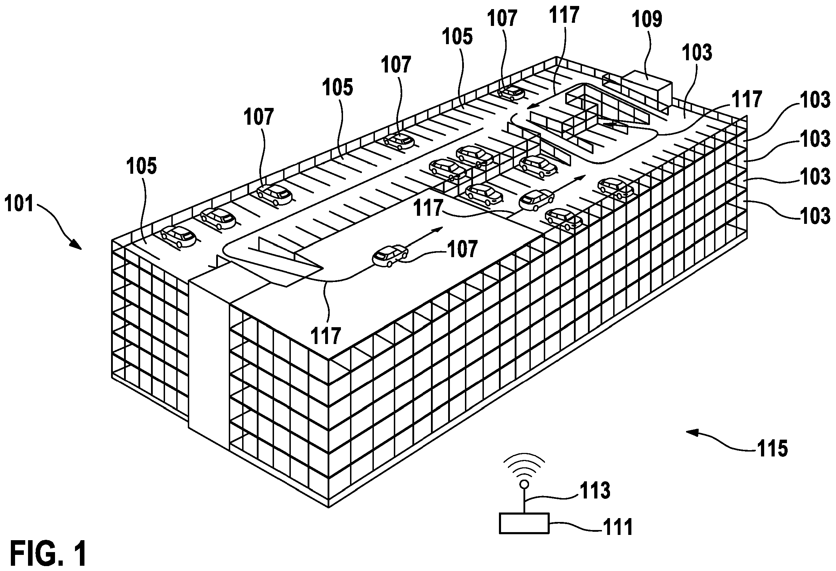

Fig. 1 zeigt eine Draufsicht von schräg oben auf einen mehrgeschossigen Parkplatz 101. Der Parkplatz 101 ist als ein Parkhaus ausgebildet. Der Parkplatz 101 umfasst mehrere Geschosse 103. Symbolisch und exemplarisch sind mehrere Parkpositionen 105 auf dem obersten Geschoss 103 des Parkplatzes 101 eingezeichnet. Obwohl nicht explizit eingezeichnet, weisen auch die weiteren Geschosse 103 entsprechende Parkpositionen 105 auf. Symbolisch und exemplarisch sind mehrere Fahrzeuge 107 gezeichnet, die in einer Parkposition 105 des obersten Geschosses 103 abgestellt sind. Obwohl nicht explizit eingezeichnet, können weitere Fahrzeuge 107 auch in entsprechenden Parkpositionen der weiteren Geschosse 103 abgestellt sein.

Der Parkplatz 101 umfasst eine Aufzugsanlage 109. Die Aufzugsanlage 109 ist insbesondere ausgebildet, ein Fahrzeug von einem Geschoss zu einem weiteren Geschoss zu transportieren.

Ferner ist eine Steuerungseinrichtung 111 vorgesehen. Die Steuerungseinrichtung 111 ist ausgebildet, ein Fahrzeug ferngesteuert von einer Startposition zu einer Zielposition zu überführen und/oder einem zumindest teilweise autonom fahrenden Fahrzeug bei seiner zumindest teilweisen autonomen Fahrt von einer Startposition zu einer Zielposition zu assistieren. Hierbei sind die beiden Positionen in verschiedenen Geschossen 103 des Parkplatzes 101 lokalisiert.

Die Steuerungseinrichtung 111 ist ausgebildet, das Fahrzeug während der Überführung in die Aufzugsanlage 109 ferngesteuert und/oder assistierend zu führen und/oder aus der Aufzugsanlage 109 ferngesteuert und/oder assistierend zu führen. Dadurch kann das Fahrzeug in vorteilhafter Weise vom Geschoss der Startposition zum Geschoss der Zielposition gelangen.

Die Zielposition kann zum Beispiel eine Parkposition 105 auf dem obersten Geschoss 103 sein. Die Starposition ist zum Beispiel eine Abholposition (nicht explizit dargestellt) im Erdgeschoss. Somit kann zum Beispiel die Steuerungseinrichtung 111 ein Fahrzeug vom Erdgeschoss zum obersten Geschoss 103 fernsteuern. Insbesondere kann die Startposition eine 105 im obersten Geschoss 103 sein. Die Zielposition ist dann eine Abholposition im Erdgeschoss des Parkplatzes 101.

Die Steuerungseinrichtung 111 umfasst eine drahtlose Kommunikationsschnittstelle 113. Somit kann die Steuerungseinrichtung 111 über ihre Kommunikationsschnittstelle 113 mittels eines drahtlosen Kommunikationsnetzwerks mit dem Fahrzeug kommunizieren. Insbesondere kann die Steuerungseinrichtung 111 Steuerungsbefehle zwecks Fernsteuerung des Fahrzeugs über das Kommunikationsnetzwerk an das Fahrzeug senden.

Die Steuerungseinrichtung 111 kann mehrere solcher drahtlosen Kommunikationsschnittstellen 113 umfassen, die räumlich verteilt im Parkplatz 101 angeordnet sind, so dass in vorteilhafter Weise eine ausreichende Funkabdeckung ermöglicht ist.

Obwohl die Steuerungseinrichtung 111 in Fig. 1 außerhalb des Parkplatzes 101 eingezeichnet ist, ist insbesondere vorgesehen, dass die Steuerungseinrichtung 111 innerhalb des Parkplatzes angeordnet sein kann.

Somit zeigt Fig. 1 ein Parksystem 115 umfassend den mehrgeschossigen Parkplatz 101 sowie die Steuerungseinrichtung 111.

Das Bezugszeichen 117 zeigt auf Pfeile, die symbolisch auf dem obersten Geschoss 103 des Parkplatzes 101 eingezeichnet sind. Diese Pfeile 117 sollen beispielhafte Fahrwege der Fahrzeuge 107 zu ihren Parkpositionen 105 symbolisieren oder kennzeichnen.

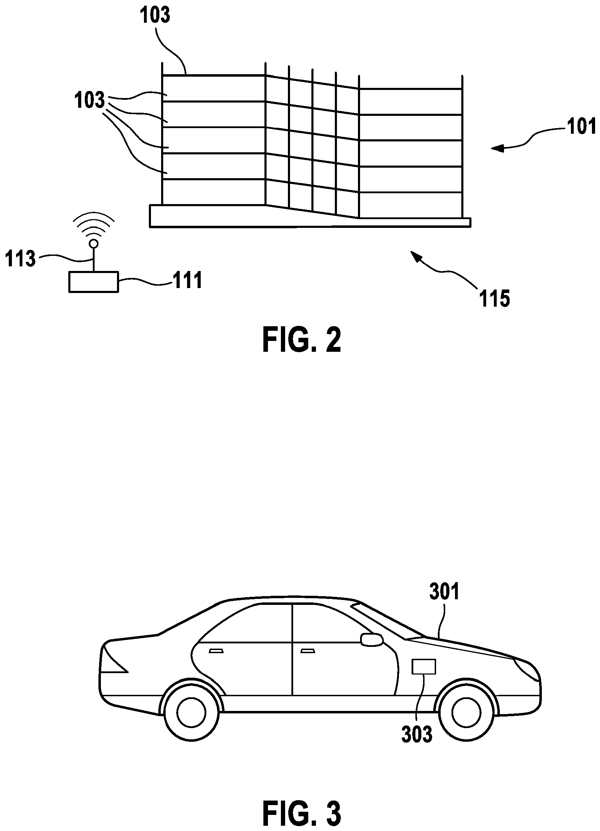

Fig. 2 zeigte eine vereinfachte Schnittansicht des Parkplatzes 101. Der Übersicht halber sind die Parkpositionen 105 sowie die Fahrzeuge 107 nicht eingezeichnet. Ebenfalls ist die Aufzugsanlage 109 der Übersicht halber nicht eingezeichnet.

Fig. 3 zeigt ein Fahrzeug 301.

Das Fahrzeug 301 umfasst eine Steuerungseinrichtung 303, die ausgebildet ist, das Fahrzeug 301 zumindest teilautonom, insbesondere vollautonom, von einer Startposition zu einer Zielposition zu überführen, wobei die beiden Positionen von einem mehrgeschossigen Parkplatz umfasst sind und wobei die beiden Positionen in verschiedenen Geschossen des Parkplatzes lokalisiert sind, wobei die Steuerungseinrichtung 303 ausgebildet ist, das Fahrzeug 301 während der Überführung in eine Aufzugsanlage des Parkplatzes zu führen und/oder aus der Aufzugsanlage des Parkplatzes zu führen, so dass das Fahrzeug 301 vom Geschoss der Startposition zum Geschoss der Zielposition gelangen kann.

Die Steuerungseinrichtung 303 des Fahrzeugs 301 kann zum Beispiel eine Kommunikationsschnittstelle umfassen. Insbesondere handelt es sich bei dieser Kommunikationsschnittstelle um eine drahtlose Kommunikationsschnittstelle. Somit kann zum Beispiel das Fahrzeug 301 mit der Steuerungseinrichtung 111 des Parksystems 115 gemäß Fig. 1 kommunizieren.

Das Fahrzeug 301 umfasst nach einer Ausführungsform ein oder mehrere Umfeldsensoren. Der eine oder die mehreren Umfeldsensoren umfassen zum Beispiel folgende Umfeldsensoren: Radarsensor, Videosensor, Lasersensor, Lidarsensor und Ultraschallsensor.

Das Fahrzeug 301 kann zum Beispiel ausgebildet sein, autonom eine Beförderung mittels der Aufzugsanlage 109 anzufordern. Das heißt also insbesondere, dass die Steuerungseinrichtung 303 ausgebildet ist, autonom mit der Steuerungseinrichtung 111 zu kommunizieren und von dieser die Beförderung mittels der Aufzugsanlage 109 anzufordern. Das Anfordern kann zum Beispiel eine Zeitangabe umfassen, wann die Aufzugsanlage 109 für die Beförderung bereit sein soll. Für das Ermitteln dieser Zeitangabe kann zum Beispiel geschätzt werden, wie lange das Fahrzeug von seiner momentanen Position zur Aufzugsanlage 109 benötigt.

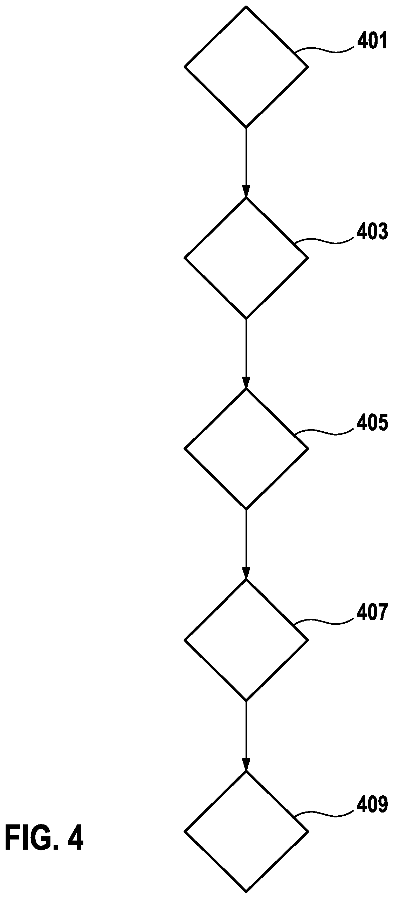

Fig. 4 zeigt ein Ablaufdiagramm eines Verfahrens zum Überführen eines Fahrzeugs von einer Startposition zu einer Zielposition, wobei die beiden Positionen von einem mehrgeschossigen Parkplatz umfasst sind und wobei die beiden Positionen in verschiedenen Geschossen des Parkplatzes lokalisiert sind.

Das Fahrzeug fährt gemäß einem Schritt 401 von seiner Startposition zur Aufzugsanlage. Dies insbesondere autonom, assistiert geführt oder ferngesteuert. In einem Schritt 403 fährt das Fahrzeug in die Aufzugsanlage hinein. Das heißt also zum Beispiel, dass das Fahrzeug in eine Aufzugskabine einfährt oder auf eine Transportplattform der Aufzugsanlage auffährt.

In einem Schritt 405 befördert dann die Aufzugsanlage das Fahrzeug vom Geschoss der Startposition zum Geschoss der Zielposition.

In einem Schritt 407 fährt das Fahrzeug aus der Aufzugsanlage hinaus. Dies insbesondere autonom, assistierend geführt oder ferngesteuert.

Von der Aufzugsanlage fährt dann das Fahrzeug in einem Schritt 409 zu seiner Zielposition und dies ebenfalls insbesondere ferngesteuert, assistierend geführt oder autonom.

Zusammenfassend wird also für ein AVP-Fahrzeug eine Aufzugsanlage, umgangssprachlich auch Fahrstuhl genannt, eingesetzt, damit das Fahrzeug von einer Startposition zu einer Zielposition gelangen kann, wenn sich die beiden Positionen in unterschiedlichen Geschossen des Parkplatzes befinden.

Das heißt also insbesondere, dass das AVP-Fahrzeug von seiner Abgabeposition, die auch als eine Dropzone bezeichnet werden kann, direkt zu einer Aufzugsanlage, die sich vorzugsweise sehr nah an der Dropzone befindet, geführt wird. Die Aufzugsanlage befördert das AVP-Fahrzeug in die entsprechende Etage, also das entsprechende Geschoss (zum Beispiel Keller, höchste Etage). Nachdem das Fahrzeug in dem entsprechenden Geschoss angekommen ist, fährt es von der Aufzugsanlage zu seiner Parkposition. Der Rückweg von der Parkposition zur Dropzone verhält sich analog.

Nach einer Ausführungsform wird dieser Prozess, also das Fahren von der Dropzone zur Parkposition und zurück inklusive der Beförderung mittels der Aufzugsanlage mittels des Parkplatzmanagementsystems gesteuert.

Ein erfindungsgemäßer Vorteil ist insbesondere darin zu sehen, dass ein AVP-Fahrbetrieb einfach von einem Mixbetrieb getrennt werden kann. Dies insbesondere, wenn sich zumindest eine der beiden Positionen, vorzugsweise beide Positionen, innerhalb eines für manuell geführte Fahrzeuge und/oder für Personen gesperrten Bereichs lokalisiert ist. Dadurch wird der AVP-Vorgang sehr viel einfacher und Beschädigungen sowie Verletzungen können vermindert werden.

## Patentansprüche

1. Verfahren zum Überführen eines Fahrzeugs (107, 301) von einer Startposition zu einer Zielposition, wobei die beiden Positionen von einem mehrgeschossigen Parkplatz (101) umfasst sind und wobei die beiden Positionen in verschiedenen Geschossen (103) des Parkplatzes (101) lokalisiert sind, wobei das Fahrzeug (107, 301) während der Überführung in eine Aufzugsanlage (109) des Parkplatzes (101) und/oder aus der Aufzugsanlage (109) des Parkplatzes (101) geführt wird, so dass das Fahrzeug (107, 301) vom Geschoss (103) der Startposition zum Geschoss (103) der Zielposition gelangen kann, wobei das Überführen ein Fernsteuern des Fahrzeugs (107, 301) und/oder ein zumindest teilautonomes Fahren des Fahrzeugs (107, 301) von der Startposition zur Zielposition umfasst, wobei das Fahrzeug (107, 301) ein automated valet parking, AVP-Fahrzeug ist, wobei ein AVP-Fahrzeug ausgebildet ist, einen automatischen oder vollautomatisierten Parkvorgang durchzuführen.

2. Verfahren nach Anspruch 1, wobei ein Betrieb der Aufzugsanlage (109) in Abhängigkeit einer Bewegung des Fahrzeugs (107, 301) während der Überführung gesteuert wird, um eine Wartezeit des Fahrzeugs (107, 301) an der Aufzugsanlage (109) zu reduzieren.

3. Verfahren nach Anspruch 1 oder 2, wobei das Fahrzeug (107, 301) während der Überführung autonom eine Beförderung mittels der Aufzugsanlage (109) anfordert.

4. Verfahren nach einem der vorherigen Ansprüche, wobei das Fahrzeug (107, 301) selbst die Aufzugsanlage steuert, um mittels der Aufzugsanlage (109) vom Geschoss (103) der Startposition zum Geschoss (103) der Zielposition befördert zu werden.

5. Verfahren nach einem der Ansprüche 1 bis 3, wobei die Aufzugsanlage (109) mittels einer fahrzeugexternen Steuerungseinrichtung (111) gesteuert wird, um das Fahrzeug (107, 301) mittels der Aufzugsanlage (109) vom Geschoss (103) der Startposition zum Geschoss (103) der Zielposition zu befördern.

6. Verfahren nach einem der vorherigen Ansprüche, wobei zumindest eine der beiden Positionen innerhalb eines für manuell geführte Fahrzeuge und/oder für Personen gesperrten Bereichs lokalisiert ist.

7. Verfahren nach einem der vorherigen Ansprüche, wobei zumindest eine der beiden Positionen innerhalb eines für manuell geführte Fahrzeuge und/oder für Personen zugelassenen Bereichs lokalisiert ist.

8. Fahrzeug (107, 301), umfassend eine Steuerungseinrichtung (303), die ausgebildet ist, das Fahrzeug (107, 301) zumindest teilautonom von einer Startposition zu einer Zielposition zu überführen, wobei die beiden Positionen von einem mehrgeschossigen Parkplatz (101) umfasst sind und wobei die beiden Positionen in verschiedenen Geschossen (103) des Parkplatzes (101) lokalisiert sind, wobei die Steuerungseinrichtung (303) ausgebildet ist, das Fahrzeug (107, 301) während der Überführung in eine Aufzugsanlage (109) des Parkplatzes (101) zu führen und/oder aus der Aufzugsanlage (109) des Parkplatzes (101) zu führen, so dass das Fahrzeug (107, 301) vom Geschoss (103) der Startposition zum Geschoss (103) der Zielposition gelangen kann,
wobei das Überführen ein Fernsteuern des Fahrzeugs (107, 301) und/oder ein zumindest teilautonomes Fahren des Fahrzeugs (107, 301) von der Startposition zur Zielposition umfasst,
wobei das Fahrzeug (107, 301) ein automated valet parking, AVP-Fahrzeug ist
wobei ein AVP-Fahrzeug ausgebildet ist, einen automatischen oder vollautomatisierten Parkvorgang durchzuführen.

9. Fahrzeug (107, 301) nach Anspruch 8, wobei die Steuerungseinrichtung (303) ausgebildet ist, während der Überführung autonom eine Beförderung mittels der Aufzugsanlage (109) anzufordern.

10. Parksystem (115) für Fahrzeuge (107, 301), umfassend einen mehrgeschossigen Parkplatz (101) mit einer Aufzugsanlage (109) und eine Steuerungseinrichtung (111), die ausgebildet ist, ein Fahrzeug (107, 301) ferngesteuert von einer Startposition zu einer Zielposition zu überführen und/oder einem zumindest teilweise autonom fahrenden Fahrzeug (107, 301) bei seiner zumindest teilweisen autonomen Fahrt von der Startposition zu der Zielposition zu assistieren, wobei die beiden Positionen von dem Parkplatz (101) umfasst sind und wobei die beiden Positionen in verschiedenen Geschossen (103) des Parkplatzes (101) lokalisiert sind, wobei die Steuerungseinrichtung (111) ausgebildet ist, das Fahrzeug (107, 301) während der Überführung in eine Aufzugsanlage (109) des Parkplatzes (101) ferngesteuert und/oder assistierend zu führen und/oder aus der Aufzugsanlage (109) des Parkplatzes (101) ferngesteuert und/oder assistierend zu führen, so dass das Fahrzeug (107, 301) vom Geschoss (103) der Startposition zum Geschoss (103) der Zielposition gelangen kann,
wobei das Fahrzeug (107, 301) ein automated valet parking, AVP-Fahrzeug ist,
wobei ein AVP-Fahrzeug ausgebildet ist, einen automatischen oder vollautomatisierten Parkvorgang, durchzuführen.

11. Parksystem (115) nach Anspruch 10, wobei die Steuerungseinrichtung (111) ausgebildet ist, einen Betrieb der Aufzugsanlage (109) in Abhängigkeit von einer Bewegung des Fahrzeugs (107, 301) während der Überführung zu steuern, um eine Wartezeit des Fahrzeugs (107, 301) an der Aufzugsanlage (109) zu reduzieren.

12. Computerprogramm, umfassend Programmcode zur Durchführung des Verfahrens nach einem der Ansprüche 1 bis 7, wenn das Computerprogramm auf einem Computer ausgeführt wird.

## Claims

1. Method for transferring a vehicle (107, 301) from a starting position to a destination position, wherein the two positions are encompassed by a multi-storey car park (101), and wherein the two positions are located on different storeys (103) of the car park (101), wherein the vehicle (107, 301), during the transfer, is guided into an elevator installation (109) of the car park (101) and/or out of the elevator installation (109) of the car park (101), such that the vehicle (107, 301) can move from the storey (103) of the starting position to the storey (103) of the destination position, wherein the transfer comprises remote control of the vehicle (107, 301) and/or at least partially autonomous driving of the vehicle (107, 301) from the starting position to the destination position, wherein the vehicle (107, 301) is an automated valet parking (AVP) vehicle, wherein an AVP vehicle is designed to carry out an automatic or fully automated parking process.

2. Method according to Claim 1, wherein operation of the elevator installation (109) is controlled in a manner dependent on a movement of the vehicle (107, 301) during the transfer in order to reduce a waiting time of the vehicle (107, 301) at the elevator installation (109).

3. Method according to Claim 1 or 2, wherein the vehicle (107, 301), during the transfer, autonomously requests conveyance by means of the elevator installation (109).

4. Method according to any of the preceding claims, wherein the vehicle (107, 301) itself controls the elevator installation so as to be conveyed by means of the elevator installation (109) from the storey (103) of the starting position to the storey (103) of the destination position.

5. Method according to any of Claims 1 to 3, wherein the elevator installation (109) is controlled by means of a vehicle-external control device (111) in order to convey the vehicle (107, 301) by means of the elevator installation (109) from the storey (103) of the starting position to the storey (103) of the destination position.

6. Method according to any of the preceding claims, wherein at least one of the two positions is located within an area to which access is prohibited for manually controlled vehicles and/or for pedestrians.

7. Method according to any of the preceding claims, wherein at least one of the two positions is located within an area to which access is allowed for manually controlled vehicles and/or for pedestrians.

8. Vehicle (107, 301), comprising a control device (303) which is designed to transfer the vehicle (107, 301) at least partially autonomously from a starting position to a destination position, wherein the two positions are encompassed by a multi-storey car park (101), and wherein the two positions are located on different storeys (103) of the car park (101), wherein the control device (303) is designed to guide the vehicle (107, 301), during the transfer, into an elevator installation (109) of the car park (101) and/or out of the elevator installation (109) of the car park (101), such that the vehicle (107, 301) can move from the storey (103) of the starting position to the storey (103) of the destination position, wherein the transfer comprises remote control of the vehicle (107, 301) and/or at least partially autonomous driving of the vehicle (107, 301) from the starting position to the destination position, wherein the vehicle (107, 301) is an automated valet parking (AVP) vehicle, wherein an AVP vehicle is designed to carry out an automatic or fully automated parking process.

9. Vehicle (107, 301) according to Claim 8, wherein the control device (303) is designed to, during the transfer, autonomously request conveyance by means of the elevator installation (109).

10. Parking system (115) for vehicles (107, 301), comprising a multi-storey car park (101) with an elevator installation (109) and comprising a control device (111) which is designed to transfer a vehicle (107, 301) in remote-controlled fashion from a starting position to a destination position and/or to assist an at least partially autonomously driving vehicle (107, 301) in its at least partially autonomous travel from the starting position to the destination position, wherein the two positions are encompassed by the multi-storey car park (101), and wherein the two positions are located on different storeys (103) of the car park (101), wherein the control device (111) is designed to guide the vehicle (107, 301), during the transfer, in remote-controlled and/or assisting fashion into an elevator installation (109) of the car park (101) and/or out of the elevator installation (109) of the car park (101), such that the vehicle (107, 301) can move from the storey (103) of the starting position to the storey (103) of the destination position, wherein the vehicle (107, 301) is an automated valet parking (AVP) vehicle, wherein an AVP vehicle is designed to carry out an automatic or fully automated parking process.

11. Parking system (115) according to Claim 10, wherein the control device (111) is designed to control operation of the elevator installation (109) in a manner dependent on a movement of the vehicle (107, 301) during the transfer in order to reduce a waiting time of the vehicle (107, 301) at the elevator installation (109).

12. Computer program, comprising program code for carrying out the method according to any of Claims 1 to 7, if the computer program is executed on a computer.

## Revendications

1. Procédé permettant de transférer un véhicule (107, 301) d'une position de départ à une position de destination, les deux positions faisant partie d'un parking à plusieurs niveaux (101) et les deux positions étant situées sur différents niveaux (103) du parking (101), dans lequel, pendant le transfert, le véhicule (107, 301) est amené à entrer dans une installation de monte-charge (109) du parking (101) et/ou est amené à sortir de l'installation de monte-charge (109) du parking (101) de sorte que le véhicule (107, 301) peut aller du niveau (103) de la position de départ au niveau (103) de la position de destination, le transfert comprenant le fait de télécommander le véhicule (107, 301) et/ou le fait de conduire le véhicule (107, 301) de manière au moins partiellement autonome de la position de départ à la position de destination, dans lequel le véhicule (107, 301) est un véhicule pour parking avec voiturier automatisé, AVP, un véhicule AVP étant réalisé pour effectuer une opération de stationnement automatique ou entièrement automatisée.

2. Procédé selon la revendication 1, dans lequel un fonctionnement de l'installation de monte-charge (109) est commandé en fonction d'un déplacement du véhicule (107, 301) pendant le transfert afin de réduire un temps d'attente du véhicule (107, 301) au niveau de l'installation de monte-charge (109).

3. Procédé selon la revendication 1 ou 2, dans lequel le véhicule (107, 301) demande de manière autonome un transport au moyen de l'installation de monte-charge (109) pendant le transfert.

4. Procédé selon l'une quelconque des revendications précédentes, dans lequel le véhicule (107, 301) commande lui-même l'installation de monte-charge afin d'être transporté au moyen de l'installation de monte-charge (109) du niveau (103) de la position de départ au niveau (103) de la position de destination.

5. Procédé selon l'une quelconque des revendications 1 à 3, dans lequel l'installation de monte-charge (109) est commandée au moyen d'un dispositif de commande externe au véhicule (111) afin de transporter le véhicule (107, 301) au moyen de l'installation de monte-charge (109) du niveau (103) de la position de départ au niveau (103) de la position de destination.

6. Procédé selon l'une quelconque des revendications précédentes, dans lequel au moins l'une des deux positions est située à l'intérieur d'une zone interdite aux véhicules à conduite manuelle et/ou aux personnes.

7. Procédé selon l'une quelconque des revendications précédentes, dans lequel au moins l'une des deux positions est située à l'intérieur d'une zone autorisée pour des véhicules à conduite manuelle et/ou pour des personnes.

8. Véhicule (107, 301), comprenant un dispositif de commande (303) qui est réalisé pour transférer le véhicule (107, 301) de manière au moins partiellement autonome d'une position de départ à une position de destination, les deux positions faisant partie d'un parking à plusieurs niveaux (101) et les deux positions étant situées sur différents niveaux (103) du parking (101), dans lequel le dispositif de commande (303) est réalisé pour amener le véhicule (107, 301) à entrer dans une installation de monte-charge (109) du parking (101) et/ou pour l'amener à sortir de l'installation de monte-charge (109) du parking (101) pendant le transfert, de sorte que le véhicule (107, 301) peut aller du niveau (103) de la position de départ au niveau (103) de la position de destination,
le transfert comprenant le fait de télécommander le véhicule (107, 301) et/ou le fait de conduire le véhicule (107, 301) de manière au moins partiellement autonome de la position de départ à la position de destination,
le véhicule (107, 301) étant un véhicule pour parking avec voiturier automatisé, AVP,
un véhicule AVP étant réalisé pour effectuer une opération de stationnement automatique ou entièrement automatisée.

9. Véhicule (107, 301) selon la revendication 8, dans lequel le dispositif de commande (303) est réalisé pour demander de manière autonome un transport au moyen de l'installation de monte-charge (109) pendant le transfert.

10. Système de stationnement (115) pour véhicules (107, 301), comprenant un parking à plusieurs niveaux (101) doté d'une installation de monte-charge (109), et un dispositif de commande (111) réalisé pour transférer un véhicule (107, 301) de manière télécommandée d'une position de départ à une position de destination et/ou pour assister un véhicule (107, 301) à conduite au moins partiellement autonome lors de sa conduite au moins partiellement autonome de la position de départ à la position de destination, les deux positions faisant partie d'un parking (101) et les deux positions étant situées sur différents niveaux (103) du parking (101), dans lequel le dispositif de commande (111) est réalisé pour amener de manière télécommandée et/ou assistée le véhicule (107, 301) à entrer dans une installation de monte-charge (109) du parking (101) et/ou pour l'amener de manière télécommandée et/ou assistée à sortir de l'installation de monte-charge (109) du parking (101) pendant le transfert, de sorte que le véhicule (107, 301) peut aller du niveau (103) de la position de départ au niveau (103) de la position de destination,
dans lequel le véhicule (107, 301) est un véhicule pour parking avec voiturier automatisé, AVP,
un véhicule AVP étant réalisé pour effectuer une opération de stationnement automatique ou entièrement automatisée.

11. Système de stationnement (115) selon la revendication 10, dans lequel le dispositif de commande (111) est réalisé pour commander un fonctionnement de l'installation de monte-charge (109) en fonction d'un déplacement du véhicule (107, 301) pendant le transfert afin de réduire un temps d'attente du véhicule (107, 301) au niveau de l'installation de monte-charge (109).

12. Programme informatique, comprenant du code programme pour exécuter le procédé selon l'une quelconque des revendications 1 à 7 lorsque le programme informatique est exécuté sur un ordinateur.
